# FASCICULE DE BREVET EUROPEEN

(11) **EP 2 774 069 B1**
(45) Date de publication et mention de la délivrance du brevet: **16.03.2016**
(21) Numéro de dépôt: 12778351.2
(22) Date de dépôt: 29.10.2012
(51) Int. Cl.: G06F 21/55, G06F 21/83

(54) **PROCÉDÉ ET DISPOSITIF DE GESTION D'UNE MATRICE DE TOUCHES, AVEC PROTECTION CONTRE UN DISPOSITIF ESPION ACTIF, PRODUIT PROGRAMME D'ORDINATEUR ET MOYEN DE STOCKAGE CORRESPONDANTS**
VERFAHREN UND VORRICHTUNG ZUR VERWALTUNG EINER ANORDNUNG VON TASTEN MIT SCHUTZ GEGEN EINE AKTIVE SPIONVORRICHTUNG, COMPUTERPROGRAMMPRODUKT UND SPEICHERMITTEL DAFÜR
METHOD AND DEVICE FOR MANAGING AN ARRAY OF KEYS, WITH PROTECTION AGAINST AN ACTIVE SPY DEVICE, COMPUTER PROGRAM PRODUCT AND STORAGE MEANS CORRESPONDING THERETO

(30) Priorité: 04.11.2011 FR 1160022
(43) Date de publication de la demande: 10.09.2014
(73) Titulaire: Ingenico Group, 75015 Paris (FR)
(72) Inventeur: BELLAHCENE, Mohammed, F-69003 Lyon (FR); BENOIT, Olivier, F-26120 Malissard (FR); DELORME, Jean-Jacques, F-26320 Saint-Marcel-les-Valence (FR)
(74) Mandataire: Vidon Brevets & Stratégie
(86) Numéro de dépôt international: PCT/EP2012/071368
(87) Numéro de publication internationale: WO 2013/064453

(56) Documents cités:
- EP-A1- 0 248 712
- EP-A1- 0 248 712
- EP-A1- 0 573 719
- EP-A1- 0 573 719
- DE-A1- 19 959 163
- GB-A- 2 190 775
- GB-A- 2 190 775

## Description

### 1. DOMAINE DE L'INVENTION

Le domaine de l'invention est celui des claviers matriciels, c'est-à-dire des claviers comprenant une matrice de touches permettant à un utilisateur de saisir des caractères (lettres, chiffres, symboles...).

Plus précisément, l'invention concerne une technique de gestion sécurisée d'une telle matrice de touches par un dispositif (par exemple un processeur), afin de déterminer la ou les touches pressées par l'utilisateur. Cette technique est aussi appelée « routine de balayage clavier » (ou « keyboard scan routine » en anglais).

L'invention s'applique notamment, mais non exclusivement, au clavier d'un terminal de paiement permettant le règlement d'achats de biens et de services. Le clavier permet dans ce cas la saisie des montants des transactions par le vendeur, ainsi que la saisie des codes confidentiels (codes PIN, pour « Personal Identity Number » en anglais) par les clients.

L'invention n'est pas limitée à un type particulier de clavier et s'applique quels que soient le nombre et la nature des touches du clavier (touches numériques, touches de fonction...).

### 2. ARRIÈRE-PLAN TECHNOLOGIQUE

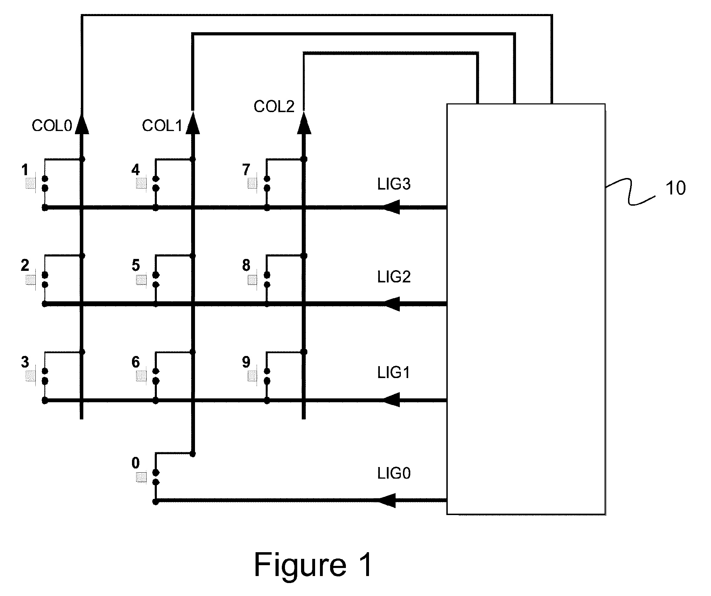

La **figure 1** présente un exemple de clavier numérique comprenant une matrice de touches reliée à un processeur 10. Dans cet exemple, la matrice de touches comprend dix touches (associées aux chiffres 0 à 9), quatre lignes (référencées LIG0 à LIG3) et trois colonnes (référencées COL0 à COL2). Chaque touche permet, quand elle est pressée, de court-circuiter une ligne et une colonne de la matrice. Par exemple, la touche associée au chiffre 6 permet, quand elle est pressée, de court-circuiter la ligne LIG1 et la colonne COL1.

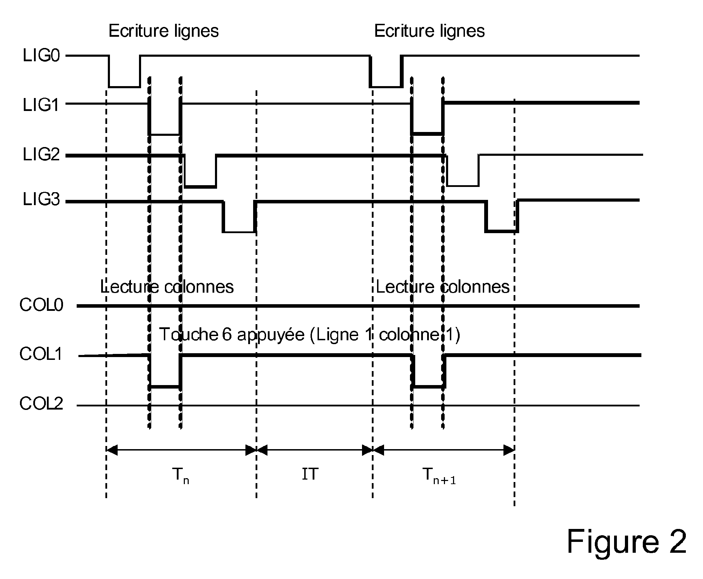

La technique classique de gestion d'une matrice de touches consiste, pour le processeur 10, à effectuer plusieurs itérations successives d'une phase de balayage. La **figure 2** illustre deux itérations successives (référencées Tₙ et Tₙ₊₁). Chaque itération de la phase de balayage comprend les étapes suivantes, pour chacune des lignes LIG0 à LIG3 traitées successivement :
- écriture d'une valeur logique prédéterminée (niveau logique « 0 » dans l'exemple de la figure 2) sur la ligne ; et
- pour chaque colonne COL0 à COL2, lecture d'une valeur logique sur la colonne pour déterminer si la colonne est en court-circuit avec la ligne, par comparaison entre la valeur logique lue et la valeur logique prédéterminée.

En d'autres termes, quand il exécute une itération de la phase de balayage, le processeur écrit sur les lignes une par une, et lit sur les colonnes simultanément. Le processeur peut ainsi détecter qu'une unique touche a été pressée ou bien que plusieurs touches ont été pressées simultanément.

Dans l'exemple de la figure 2 et dans la suite de la description, l'écriture sur les lignes et la lecture sur les colonnes sont effectuées sur un niveau logique « 0 », en supposant que les lignes et les colonnes sont par défaut à la valeur logique « 1 ». Il est clair cependant que le principe reste le même si on inverse l'utilisation des niveaux logiques « 0 » et « 1 » (c'est-à-dire si l'écriture sur les lignes et la lecture sur les colonnes sont effectuées sur le niveau logique « 1 », en supposant que les lignes et les colonnes sont par défaut à la valeur logique « 0 »).

On considère que la formulation ci-dessus, qui est basée sur une matrice de touches (matrice M) et les notions d'écritures successives sur les lignes de cette matrice M et de lectures simultanées sur les colonnes de cette matrice M, est générique. En effet, il existe une alternative consistant à écrire successivement sur les colonnes de cette matrice M et à lire simultanément sur les lignes de cette matrice M. Mais cette alternative peut être traitée selon la formulation précédente, si l'on considère une nouvelle matrice M' dans laquelle les lignes correspondent aux colonnes de la matrice M et les colonnes correspondent aux lignes de la matrice M.

Dans l'exemple de la figure 2, on suppose que la touche 6 est pressée. Le processeur détecte donc un court-circuit entre la ligne LIG1 et la colonne COL1, et en déduit que la touche 6 située à l'intersection entre cette ligne LG1 et cette colonne COL1 a été pressée.

Il existe un besoin de sécuriser la technique classique de gestion d'une matrice de touches (c'est-à-dire la routine classique de balayage clavier).

Cette problématique est évoquée dans le document de brevet FR2599525, qui indique qu'il existe un risque que des personnes malveillantes tentent d'intercepter un code confidentiel au moment où il passe du clavier à des moyens propres à l'analyse matricielle du clavier, par ligne et colonne. Dans la suite de la description, ces moyens sont aussi appelés dispositif de gestion de la matrice de touches, ou encore processeur. Le document FR2599525 précise que la connaissance de la forme d'onde des signaux d'analyse du clavier permet à un dispositif espion passif de remonter immédiatement à toute information confidentielle frappée sur le clavier. Il suffit au dispositif espion passif, pour espionner le clavier, de quelques branchements (par sondes) sur les lignes et colonnes de la matrice de touches du clavier. L'espionnage des signaux présents sur les lignes et les colonnes de la matrice peut également être effectué par analyse des rayonnements électromagnétiques (ou EMA, pour « ElectroMagnetic Analysis » en anglais). Par contre, on suppose que les signaux circulant à l'intérieur du dispositif de gestion de la matrice de touches sont relativement complexes, ce qui rend difficile leur utilisation pour retrouver l'information confidentielle frappée au clavier. De ce fait, le dispositif de gestion de la matrice de touches est appelé « module protégé » dans le document FR2599525.

Afin d'améliorer la sécurité du clavier, le document FR2599525 propose une implémentation, par le dispositif de gestion de la matrice de touches (« module protégé »), de contre-mesures visant à entraver la possibilité d'interception de toute information confidentielle frappée sur le clavier (code confidentiel par exemple) par espionnage de l'état des lignes et colonnes de la matrice de touches du clavier.

Plus précisément, la technique proposée par le document FR2599525 combine :
- un premier mécanisme de simulation : le module protégé est muni de liaisons bidirectionnelles vers certaines au moins des colonnes et lignes du clavier, et le module protégé comporte des moyens pour simuler de faux actionnements de touches, certaines au moins des impulsions d'interrogation étant appliquées en même temps à au moins une ligne et au moins une colonne ;
- un mécanisme de vraie exploration du clavier : le module protégé explore le clavier touche par touche, en scrutant à chaque fois une ligne ou une colonne dite « effectivement analysée », qui ne reçoit pas l'impulsion d'interrogation (en provenance du module protégé). Lors de cette vraie exploration, il est également proposé une simulation complémentaire lorsque le module protégé se trouve en présence d'un non transfert du début de l'impulsion d'interrogation sur la colonne ou ligne analysée (c'est-à-dire non actionnement d'une ou plusieurs touches explorées) : le module protégé répond alors à cette condition en appliquant à la colonne ou ligne analysée une impulsion factice qui se termine avec l'impulsion d'interrogation (son début étant par contre légèrement retardé par rapport au début de l'impulsion d'interrogation, compte tenu du temps de décision nécessaire au module protégé) ;
- un second mécanisme de simulation : le module protégé n'effectue aucune vraie interrogation d'une touche choisie, pendant un temps prédéterminé correspondant au temps normal d'actionnement d'une touche, et il engendre pendant le même temps une fausse réponse attribuable à cette touche choisie.

Deux modes de réalisation de ces mécanismes sont proposés : dans le premier, le module protégé est muni de liaisons bidirectionnelles vers toutes les colonnes du clavier ; dans le second, le module protégé est muni de liaisons bidirectionnelles vers toutes les lignes et toutes les colonnes du clavier.

Si elle permet d'améliorer la sécurité du clavier face à un dispositif espion passif, la technique du document FR2599525 n'est cependant pas optimale. En effet, elle propose des contre-mesures pendant chaque itération de la phase de balayage, mais n'aborde pas la sécurisation du clavier pendant chaque plage temporelle entre deux itérations successives de la phase de balayage effectuées par le processeur (cette plage temporelle est appelée « plage temporelle intermédiaire » dans la suite de la description).

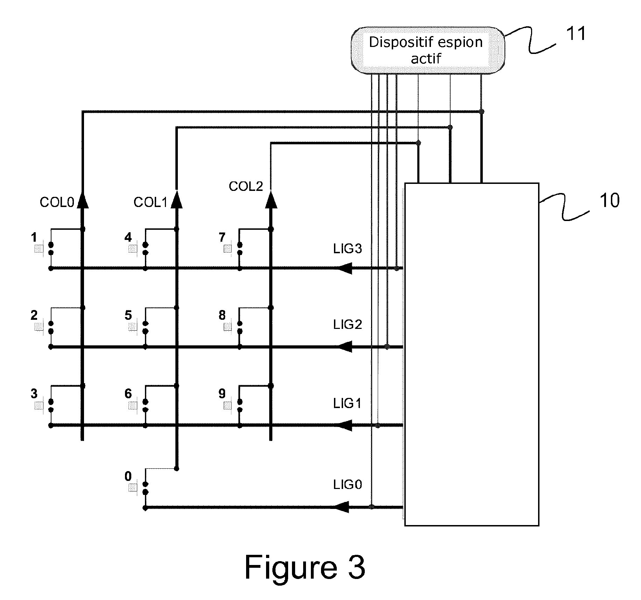

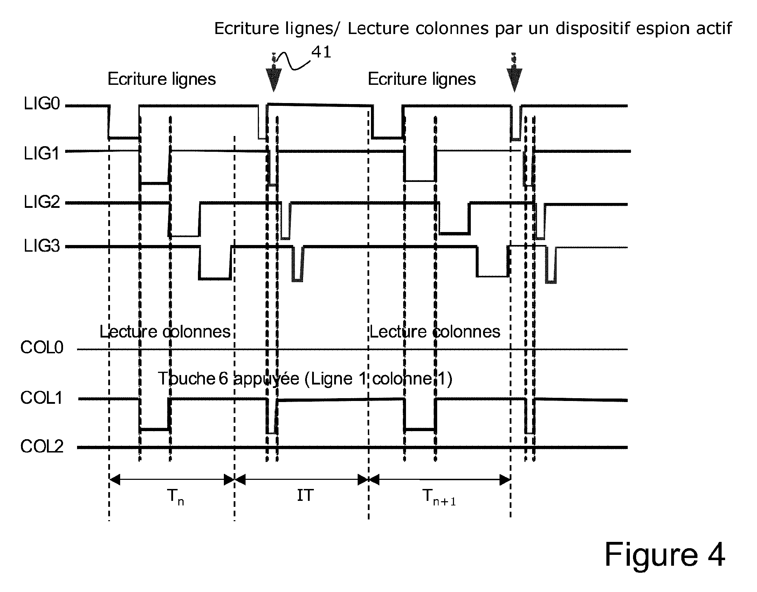

Or, dans un contexte tel que celui représenté sur la **figure 3****,** il existe un risque d'espionnage du clavier pendant la plage temporelle intermédiaire (référencée IT) si un dispositif espion actif 11 est branché par sondes sur les lignes et colonnes de la matrice de touches du clavier. En effet, comme illustré sur la **figure 4**, le dispositif espion actif 11 peut (contrairement à un dispositif espion passif) espionner le clavier, en s'affranchissant des contre-mesures, s'il effectue lui-même une itération de la phase de balayage (cette itération, avec écriture sur les lignes et lecture sur les colonnes, est symbolisée par la flèche référencée 41 sur la figure 4), pendant la plage temporelle intermédiaire IT (c'est-à-dire entre deux itérations successives Tₙ et Tₙ₊₁ de la phase de balayage effectuées par le processeur 10).

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique de gestion sécurisée, par un dispositif (par exemple un processeur), d'une matrice de touches d'un clavier.

Au moins un mode de réalisation de l'invention a également pour objectif de fournir une telle technique permettant de réduire, voire éviter, les risques d'espionnage par un dispositif espion actif capable d'effectuer lui-même une itération de la phase de balayage.

Un autre objectif d'au moins un mode de réalisation de l'invention est de fournir une telle technique qui soit simple à mettre en oeuvre et peu coûteuse.

### 4. EXPOSÉ DE L'INVENTION

Dans un mode de réalisation particulier de l'invention, il est proposé un procédé de gestion, par un dispositif, d'une matrice de touches comprenant au moins une ligne et au moins deux colonnes, chaque touche permettant, quand elle est pressée, de court-circuiter une ligne et une colonne de ladite matrice, le procédé comprenant au moins deux itérations d'une phase de balayage comprenant les étapes suivantes pour chacune des lignes traitées successivement :
- écriture d'une valeur logique prédéterminée sur la ligne ; et
- pour chaque colonne, lecture d'une valeur logique sur la colonne pour déterminer si la colonne est en court-circuit avec la ligne, par comparaison entre la valeur logique lue et la valeur logique prédéterminée,
pendant au moins une partie d'une plage temporelle comprise entre deux itérations successives de la phase de balayage, le dispositif effectue au moins un mécanisme de protection appartenant au groupe comprenant :
- un premier mécanisme de protection, consistant à lire une valeur logique sur au moins une ligne ou colonne, et détecter une tentative de balayage illicite en fonction de la valeur logique lue ;
- un deuxième mécanisme de protection, consistant à écrire une valeur logique arbitraire, égale à ou différente de la valeur logique prédéterminée, sur au moins une ligne ou colonne, de manière à empêcher une tentative de balayage illicite.

Ainsi, le dispositif de gestion de la matrice de touches du clavier met en oeuvre un mécanisme de protection (ou une combinaison de plusieurs mécanismes de protection) permettant de sécuriser le clavier pendant la plage temporelle intermédiaire, située entre deux itérations successives de la phase de balayage effectuées par le dispositif de gestion. Les premier et deuxième mécanismes ne sont pas de même nature : l'un vise à détecter une tentative de balayage illicite (de la matrice de touches du clavier) par un dispositif espion actif, tandis que l'autre vise à empêcher une telle tentative de balayage illicite.

On considère que la formulation ci-dessus, qui est basée sur une matrice de touches (matrice M) et les notions d'écritures successives (pendant T) sur chacune des lignes de cette matrice M et de lectures (pendant T1) et écritures (pendant T2) sur chacune des colonnes de cette matrice M, est générique. En effet, il existe une alternative consistant à écriture successivement (pendant T) sur chacune des colonnes de cette matrice M et à lire (pendant T1) et écrire (pendant T2) sur chacune des lignes de cette matrice M. Mais cette alternative peut être traitée selon la formulation précédente, si l'on considère une nouvelle matrice M' dans laquelle les lignes correspondent aux colonnes de la matrice M et les colonnes correspondent aux lignes de la matrice M.

Selon une première mise en oeuvre particulière, dans le premier mécanisme de protection, une tentative de balayage illicite est détectée si la valeur logique lue est la valeur logique prédéterminée.

Dans cette première mise en oeuvre particulière, le dispositif de gestion de la matrice de touches cherche à détecter une tentative de balayage illicite par un dispositif espion actif qui écrit et lit des niveaux logiques (typiquement, un signal possède un niveau logique « 0 » si sa tension est inférieure à un premier seuil, et possède un niveau logique « 1 » si sa tension est supérieure à un second seuil).

Selon une caractéristique particulière, le dispositif effectue le premier mécanisme de protection pendant toute ladite plage temporelle.

Ainsi, on sécurise le clavier pendant toute la plage temporelle intermédiaire.

Selon une caractéristique particulière, le dispositif effectue le premier mécanisme de protection sur toutes les lignes et colonnes.

De cette façon, on améliore encore la sécurisation du clavier.

Selon une deuxième mise en oeuvre particulière, le dispositif effectue le deuxième mécanisme de protection pendant toute ladite plage temporelle.

Dans cette deuxième mise en oeuvre particulière, le dispositif de gestion de la matrice de touches cherche à empêcher une tentative de balayage illicite par un dispositif espion actif qui écrit et lit des signaux analogiques non considérés comme des niveaux logiques (typiquement, un signal analogique ne possède pas un niveau logique « 0 » si sa tension n'est pas inférieure à un premier seuil, et ne possède pas un niveau logique « 1 » si sa tension n'est pas supérieure à un second seuil).

Selon une caractéristique particulière, le dispositif effectue le deuxième mécanisme de protection sur toutes les lignes et colonnes.

De cette façon, on améliore encore la sécurisation du clavier.

Selon une caractéristique particulière, le deuxième mécanisme de protection consiste à écrire une valeur logique arbitraire qui change au sein de ladite plage temporelle et/ou d'une plage temporelle intermédiaire à l'autre.

Ainsi, on complexifie l'apprentissage par un dispositif espion.

Selon une caractéristique particulière, le changement de valeur logique arbitraire, au sein de ladite plage temporelle et/ou d'une plage temporelle intermédiaire à l'autre, est aléatoire.

Ainsi, on complexifie l'apprentissage par un dispositif espion.

Selon une troisième mise en oeuvre particulière, le dispositif effectue le deuxième mécanisme de protection, sur au moins une ligne ou colonne donnée, pendant au moins une partie de la plage temporelle, sauf pendant au moins un intervalle de temps de détection. En outre, pendant chaque intervalle de temps de détection, le dispositif effectue le premier mécanisme de protection, consistant à lire une valeur logique sur ladite au moins une ligne ou colonne donnée, et détecter une tentative de balayage illicite si la valeur logique lue est différente de ladite valeur logique arbitraire écrite par le deuxième mécanisme avant ledit intervalle de temps de détection, chaque ligne ou colonne, sur laquelle le dispositif écrit en effectuant le deuxième mécanisme de protection, étant placée dans un état de basse impédance, et chaque ligne ou colonne, sur laquelle le dispositif lit en effectuant le premier mécanisme de protection, étant placée dans un état de haute impédance.

Dans cette troisième mise en oeuvre particulière, le dispositif de gestion de la matrice de touches cherche :
- pendant la plage temporelle intermédiaire à l'exception du ou des intervalles de temps de détection, à empêcher une tentative de balayage illicite par un dispositif espion actif qui écrit et lit des signaux analogiques non considérés comme des niveaux logiques ; et
- pendant le ou les intervalles de temps de détection, à détecter une tentative de balayage illicite par un dispositif espion actif qui injecte sur les lignes (de la matrice de touches) des courants suffisamment forts pour générer une tension mesurable en analogique.

Selon une caractéristique particulière, le nombre et/ou la position et/ou la durée du ou des intervalle(s) de temps de détection varie(nt) aléatoirement d'une plage temporelle intermédiaire à l'autre.

De cette façon, on évite qu'un attaquant contourne, par apprentissage, le premier mécanisme de protection effectué pendant chaque intervalle de temps de détection.

Selon une caractéristique particulière, le deuxième mécanisme de protection consiste à écrire une valeur logique arbitraire qui change au sein de ladite plage temporelle et/ou d'une plage temporelle intermédiaire à l'autre.

Ainsi, on complexifie l'apprentissage par un dispositif espion.

Selon une caractéristique particulière, le changement de valeur logique arbitraire, au sein de ladite plage temporelle et/ou d'une plage temporelle intermédiaire à l'autre, est aléatoire.

Ainsi, on complexifie l'apprentissage par un dispositif espion.

Selon une caractéristique particulière, le dispositif effectue le deuxième mécanisme de protection pendant toute ladite plage temporelle, sauf pendant ledit au moins un intervalle de temps de détection, le dispositif effectuant le premier mécanisme de protection pendant chaque intervalle de temps de détection.

Ainsi, on sécurise le clavier pendant toute la plage temporelle intermédiaire.

Selon une caractéristique particulière, le dispositif effectue les premier et deuxième mécanismes de protection sur toutes les lignes et colonnes.

De cette façon, on améliore encore la sécurisation du clavier.

Dans un autre mode de réalisation de l'invention, il est proposé un produit programme d'ordinateur qui comprend des instructions de code de programme pour la mise en oeuvre du procédé précité (dans l'un quelconque de ses différents modes de réalisation), lorsque ledit programme est exécuté sur un ordinateur ou un processeur.

Dans un autre mode de réalisation de l'invention, il est proposé un médium de stockage lisible par ordinateur et non transitoire, stockant un programme d'ordinateur comprenant un jeu d'instructions exécutables par un ordinateur ou un processeur pour mettre en oeuvre le procédé précité (dans l'un quelconque de ses différents modes de réalisation).

Dans un autre mode de réalisation de l'invention, il est proposé un dispositif de gestion d'une matrice de touches comprenant au moins une ligne et au moins deux colonnes, chaque touche permettant, quand elle est pressée, de court-circuiter une ligne et une colonne de ladite matrice, le dispositif comprenant des moyens de balayage adaptés pour effectuer au moins deux itérations d'une phase de balayage, les moyens de balayage comprenant les moyens suivants, activés pour chacune des lignes traitées successivement : des moyens d'écriture d'une valeur logique prédéterminée sur la ligne ; et des moyens de lecture d'une valeur logique sur chaque colonne pour déterminer si la colonne est en court-circuit avec la ligne, par comparaison entre la valeur logique lue et la valeur logique prédéterminée. Le dispositif comprend en outre au moins un moyen de protection activé pendant au moins une partie d'une plage temporelle comprise entre deux itérations successives de la phase de balayage, ledit au moins un moyen de protection appartenant au groupe comprenant :
- un premier moyen de protection, comprenant des moyens de lecture d'une valeur logique sur au moins une ligne ou colonne, et des moyens de détection d'une tentative de balayage illicite en fonction de la valeur logique lue ;
- un deuxième moyen de protection, comprenant des moyens d'écriture d'une valeur logique arbitraire, égale à ou différente de la valeur logique prédéterminée, sur au moins une ligne ou colonne, de manière à empêcher une tentative de balayage illicite.

Avantageusement, le dispositif de gestion de la matrice de touches comprend des moyens de mise en oeuvre des étapes qu'il effectue dans le procédé tel que décrit précédemment, dans l'un quelconque de ses différents modes de réalisation.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, présente un exemple de clavier numérique comprenant une matrice de touches reliée à un processeur ;
- la figure 2, déjà décrite en relation avec l'art antérieur, illustre la technique classique de gestion de la matrice de touches de la figure 1, dans le cas où la touche 6 est appuyée ;
- la figure 3, déjà décrite en relation avec l'art antérieur, présente le branchement d'un dispositif espion actif sur les lignes et colonnes de la matrice de touches du clavier ;
- la figure 4, déjà décrite en relation avec l'art antérieur, illustre le risque d'espionnage du clavier pendant la plage temporelle intermédiaire par le dispositif espion actif de la figure 3 ;
- la figure 5 illustre un premier mode de réalisation du procédé selon l'invention ;
- la figure 6 illustre une parade au premier mode de réalisation de la figure 5 ;
- la figure 7 illustre un deuxième mode de réalisation du procédé selon l'invention ;
- la figure 8 illustre une parade au deuxième mode de réalisation de la figure 7 ;
- la figure 9 illustre un troisième mode de réalisation du procédé selon l'invention ; et
- la figure 10 présente la structure d'un dispositif de gestion d'une matrice de touches d'un clavier, selon un mode de réalisation particulier de l'invention.

### 6. DESCRIPTION DÉTAILLÉE

Dans un souci de simplification, on utilise dans la suite de la description l'exemple de clavier de la figure 1, avec une matrice de touches comprenant dix touches (associées aux chiffres 0 à 9), quatre lignes (référencées LIG0 à LIG3) et trois colonnes (référencées COL0 à COL2). Il est clair que la technique présentée ci-dessous, selon différents modes de réalisation de l'invention, n'est pas limitée à cet exemple de clavier.

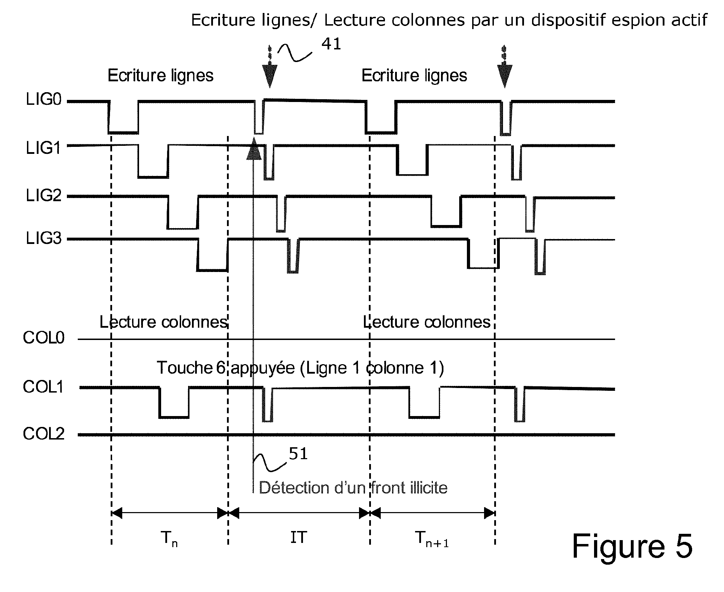

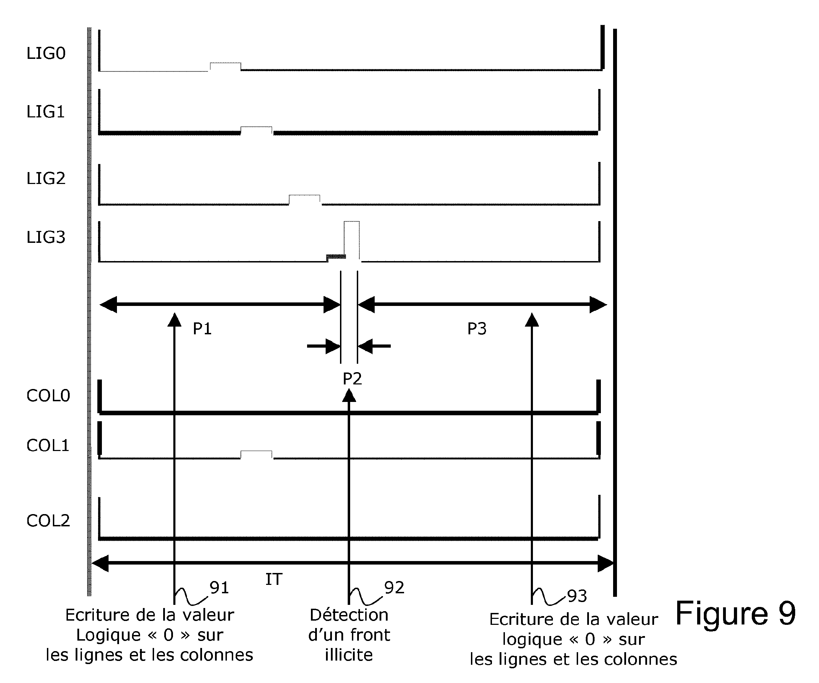

Chacune des figures 5 à 8 présente les valeurs des signaux présents sur les lignes LG0 à LG3 et les colonnes COLO à COL2, pendant deux itérations successives (référencées Tₙ et Tₙ₊₁) de la phase de balayage, ainsi que pendant la plage temporelle intermédiaire (référencée IT) située entre ces deux itérations successives. La figure 9 présente les valeurs des signaux présents sur les lignes LG0 à LG3 et les colonnes COL0 à COL2, uniquement pendant la plage temporelle intermédiaire (référencée IT).

On suppose dans la suite de la description que les impulsions d'interrogation possèdent un niveau logique « 0 ». Il est clair cependant que le principe de l'invention reste le même si on inverse l'utilisation des niveaux logiques « 0 » et « 1 ».

On présente maintenant, en relation avec la **figure 5**, un premier mode de réalisation du procédé selon l'invention.

On suppose que, comme dans l'exemple de la figure 4, le dispositif espion actif 11 espionne le clavier en effectuant lui-même une itération de la phase de balayage (cette itération, avec écriture d'un niveau logique « 0 » (impulsion d'interrogation) sur les lignes et lecture sur les colonnes, est symbolisée par la flèche référencée 41), pendant la plage temporelle intermédiaire IT (c'est-à-dire entre deux itérations successives Tₙ et Tₙ₊₁ de la phase de balayage effectuées par le processeur 10).

La technique proposée dans le premier mode de réalisation de l'invention consiste, pendant toute la plage temporelle intermédiaire IT, à lire la valeur logique présente sur chacune des lignes LG0 à LG3 et chacune des colonnes COL0 à COL2, et détecter une tentative de balayage illicite si la valeur logique lue (sur au moins une des lignes et colonnes) est la valeur logique « 0 » (niveau logique des impulsions d'interrogation).

Dans l'exemple de la figure 5, le processeur 10 détecte le front descendant correspondant au début de l'écriture, par le dispositif espion actif 11, d'un niveau logique « 0 » (impulsion d'interrogation) sur la ligne LIG0. Cette détection est symbolisée par la flèche référencée 51. Le processeur 10 en déduit l'existence d'une tentative de balayage illicite du clavier, de sorte que toute(s) action(s) appropriée(s) peu(ven)t être mise(s) en oeuvre (par exemple, mise en sécurité de l'appareil (mise hors service), déclenchement d'une alarme (message, bip, sirène...), effacement d'informations sensibles, signalement à un dispositif de surveillance pour intervention, etc).

Ce premier mode de réalisation utilise par exemple les possibilités d'interruptions du processeur 10 : entre deux itérations successives Tₙ et Tₙ₊₁ de la phase de balayage, l'ensemble des lignes/colonnes du clavier sont placées dans un « état d'entrée » (c'est-à-dire dans un état de lecture par le processeur 10) avec interruption sur changement d'état logique. En cas de balayage illicite par un dispositif espion actif 11, le processeur 10 détecte un changement de niveau logique via son système de gestion des interruptions et mémorise une tentative de balayage clavier illicite. Ce mécanisme de protection par gestion d'interruption n'est possible que sur des processeurs avec des entrées / sorties ayant des possibilités d'interruptions.

Dans une variante, le processeur 10 balaie en permanence les lignes et colonnes pour détecter un changement de niveau logique (cette variante est plus consommatrice en ressources processeur).

Dans une autre variante, le mécanisme de protection selon le premier mode de réalisation n'est effectué que pendant une partie de la plage temporelle intermédiaire IT.

Dans une autre variante, le mécanisme de protection selon le premier mode de réalisation n'est effectué que sur certaine(s) ligne(s) et/ou certaine(s) colonne(s).

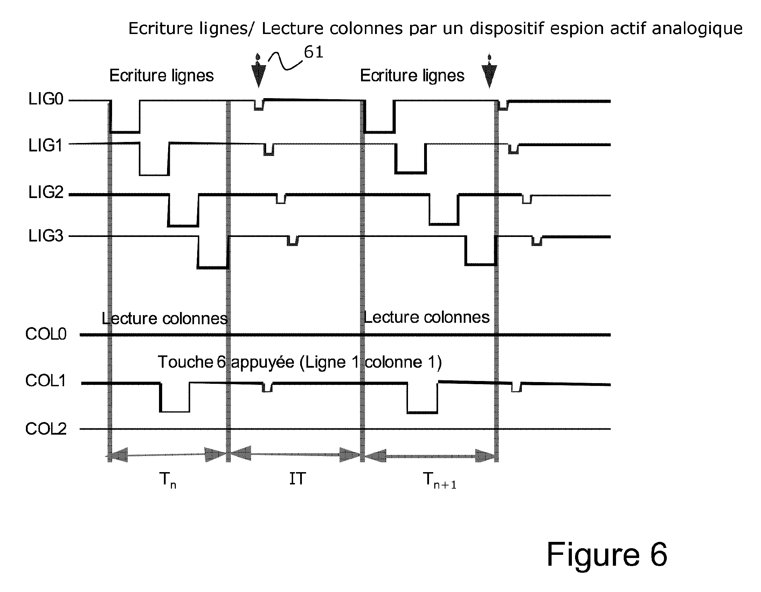

La **figure 6** illustre une parade au premier mode de réalisation de la figure 5. Cette parade consiste à utiliser un dispositif espion actif analogique 11, c'est-à-dire un dispositif espion actif avec des entrées analogiques, capable de travailler (en écriture et en lecture) avec des signaux analogiques ne déclenchant pas d'interruption ni de changement d'état logique (signaux analogiques non considérés comme des niveaux logiques « 0 », du fait qu'ils restent à un niveau de tension supérieur au seuil définissant le niveau logique « 0 »).

Sur la figure 6, l'itération de la phase de balayage effectuée par le dispositif espion actif analogique 11 (avec écriture sur les lignes et lecture sur les colonnes de signaux analogiques ne déclenchant pas d'interruption ni de changement d'état logique) est symbolisée par la flèche référencée 61.

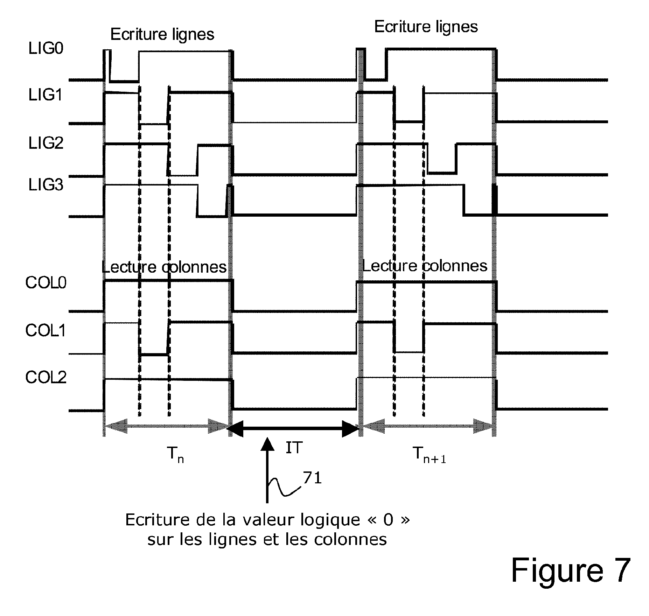

On présente maintenant, en relation avec la **figure 7****,** un deuxième mode de réalisation du procédé selon l'invention, permettant d'éviter la parade illustrée sur la figure 6.

La technique proposée dans le deuxième mode de réalisation de l'invention consiste, pendant toute la plage temporelle intermédiaire IT, à écrire la valeur logique « 0 » sur chacune des lignes LG0 à LG3 et chacune des colonnes COL0 à COL2 (niveau logique des impulsions d'interrogation). Cette écriture sur les lignes et les colonnes est symbolisée par la flèche référencée 71. En d'autres termes, le processeur 10 force les niveaux des lignes LG0 à LG3 et colonnes COLO à COL2 à un niveau logique « 0 » (les lignes et les colonnes étant placées dans un « état de sortie », c'est-à-dire dans un état d'écriture par le processeur 10). Pour cela, le processeur 10 bloque les lignes et les colonnes à la masse.

Dans une variante, le processeur 10 force les niveaux des lignes LG0 à LG3 et colonnes COL0 à COL2 à un niveau logique « 1 », pendant toute la plage temporelle intermédiaire IT.

Dans une autre variante, le processeur 10 force les niveaux des lignes LG0 à LG3 et colonnes COL0 à COL2 à un niveau logique arbitraire qui change (« 0 » ou « 1 ») d'une plage temporelle intermédiaire IT à l'autre. Ce changement est préférentiellement aléatoire afin de complexifier l'apprentissage par un dispositif espion.

Dans une autre variante, le processeur 10 force les niveaux des lignes LG0 à LG3 et colonnes COL0 à COL2 à un niveau logique arbitraire qui change (« 0 » ou « 1 ») qui change au sein de la plage temporelle intermédiaire IT. En d'autres termes, le processeur 10 force au niveau logique « 0 » pendant une ou plusieurs premières portions de la plage temporelle intermédiaire IT, et au niveau logique « 1 » pendant une ou plusieurs deuxièmes portions de la plage temporelle intermédiaire IT.

Le changement de niveau logique arbitraire (d'une plage temporelle intermédiaire IT à l'autre et/ou au sein de la plage temporelle intermédiaire IT) peut être aléatoire, afin de complexifier l'apprentissage par un dispositif espion.

Dans une autre variante, le mécanisme de protection selon ce deuxième mode de réalisation n'est effectué que pendant une partie de la plage temporelle intermédiaire IT.

Dans une autre variante, le mécanisme de protection selon ce deuxième mode de réalisation n'est effectué que sur certaine(s) ligne(s) et/ou certaine(s) colonne(s).

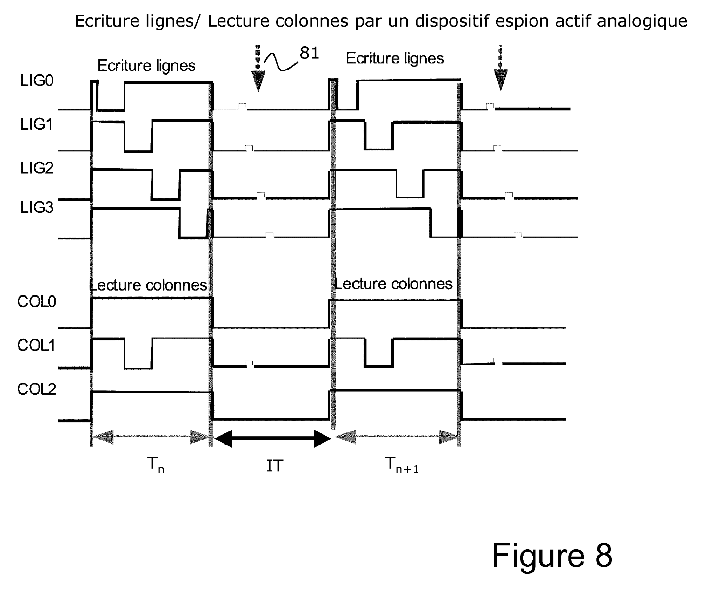

La **figure** 8 illustre une parade au deuxième mode de réalisation de la figure 7.

Cette parade consiste à utiliser un dispositif espion actif analogique 11, c'est-à-dire un dispositif espion actif avec des entrées analogiques, capable d'injecter dans les lignes LG0 à LG3 des courants suffisamment forts pour générer une tension mesurable en analogique. Il est en effet nécessaire d'injecter un courant suffisamment important sur une ligne pour obtenir une tension mesurable (c'est-à-dire en l'espèce une tension faible mais non nulle), sachant que l'impédance d'une ligne placée dans un « état de sortie » (c'est-à-dire en écriture par le processeur 10) est faible (< 1Ω).

Sur la figure 8, la flèche référencée 81 symbolise l'itération de la phase de balayage effectuée par le dispositif espion actif analogique 11, avec écriture sur les lignes (et lecture sur les colonnes) de signaux résultant de l'injection dans les lignes LG0 à LG3 de courants suffisamment forts.

On présente maintenant, en relation avec la **figure 9****,** un troisième mode de réalisation du procédé selon l'invention, permettant d'éviter la parade illustrée sur la figure 8.

La technique proposée dans le troisième mode de réalisation de l'invention consiste à :
- mettre en oeuvre un premier mécanisme pendant toute la plage temporelle intermédiaire IT, sauf pendant au moins un intervalle de temps de détection. Ce premier mécanisme est identique au mécanisme de protection selon le deuxième mode de réalisation, décrit ci-dessus en relation avec la figure 7 (y compris dans les différentes variantes, discutées ci-dessus, de ce deuxième mode de réalisation) ; et
- mettre en oeuvre un deuxième mécanisme de protection pendant chaque intervalle de temps de détection, consistant à : lire la valeur logique présente sur chacune des lignes LG0 à LG3 et chacune des colonnes COL0 à COL2, et détecter une tentative de balayage illicite si la valeur logique lue (sur au moins une des lignes et colonnes) est différente de la valeur logique arbitraire écrite par le deuxième mécanisme avant cet intervalle de temps de détection. Dans l'exemple de la figure 9, on écrit la valeur logique arbitraire « 0 » avec le premier mécanisme et on détecte une tentative de balayage illicite avec le deuxième mécanisme si la valeur logique « 1 » est lue. Ce deuxième mécanisme de protection utilise par exemple les possibilités d'interruptions du processeur 10, ou bien une détection en permanence d'un changement de niveau logique).

Ainsi, au début de chaque intervalle de temps de détection (c'est-à-dire au passage du premier au deuxième mécanisme de protection), chaque ligne ou colonne passe d'un « état de sortie » à faible impédance (état d'écriture d'une valeur logique arbitraire « 0 » ou « 1 » par le processeur 10) à un « état d'entrée » à forte impédance (état de lecture par le processeur 10). En pratique, le changement d'impédance est presque instantané (une instruction processeur). Cette variation d'impédance est suffisamment grande pour que, si un fort courant est présent sur une ligne ou une colonne, cela entraîne sur cette ligne ou colonne une tension mesurable par le processeur 10. Comme expliqué en relation avec la figure 8, un fort courant est présent sur une ligne si un dispositif espion actif analogique 11 injecte ce fort courant sur cette ligne. Un fort courant est présent sur une colonne si cette colonne est en court-circuit avec une ligne sur laquelle le dispositif espion actif analogique 11 a injecté ce fort courant.

Dans l'exemple de la figure 9, sur lequel il n'y a par souci de simplification qu'un seul intervalle de temps de détection (correspondant à la portion référencée P2 de la plage temporelle intermédiaire IT), le processeur met en oeuvre le premier mécanisme (symbolisé par les flèches référencées 91 et 93) pendant les portions référencées P1 et P3 de la plage temporelle intermédiaire IT, et il met en oeuvre le deuxième mécanisme (symbolisé par la flèche référencée 92) pendant la portion référencée P2.

Afin de complexifier l'apprentissage par un dispositif espion, le processeur 10 fait varier de manière aléatoire, d'une plage temporelle intermédiaire IT à l'autre, le nombre et/ou la position et/ou la durée du ou des intervalle(s) de temps de détection.

Dans une variante, le mécanisme de protection selon ce troisième mode de réalisation n'est effectué que pendant une partie de la plage temporelle intermédiaire IT.

Dans une autre variante, le mécanisme de protection selon ce troisième mode de réalisation n'est effectué que sur certaine(s) ligne(s) et/ou certaine(s) colonne(s).

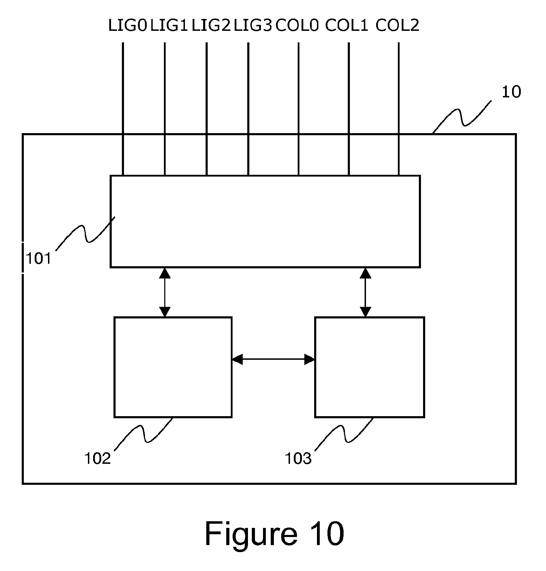

La **figure** 10 présente la structure d'un dispositif 10 de gestion d'une matrice de touches d'un clavier, selon un mode de réalisation particulier de l'invention. Ce dispositif met en oeuvre la technique présentée ci-dessus (dans l'un quelconque des modes de réalisation, présentés en relation avec les figures 5 à 9).

Dans cet exemple, le dispositif comprend une mémoire RAM 103 (pour « Random Access Memory » en anglais), une unité de traitement 101 (ou CPU, pour « Central Processing Unit » en anglais), équipée par exemple d'un processeur et pilotée par un programme stocké dans une mémoire ROM 102 (pour « Read Only Memory » en anglais). A l'initialisation, les instructions de code du programme sont par exemple chargées dans la mémoire RAM 103 avant d'être exécutées par l'unité de traitement 101. L'unité de traitement 101 gère les signaux sur les lignes et les colonnes (LIG0 à LIG3 et COL0 à COL2 dans cet exemple) de la matrice de touche du clavier, selon les instructions du programme 102, afin de mettre en oeuvre la technique présentée ci-dessus (dans l'un quelconque des modes de réalisation).

Cette figure 10 illustre seulement une manière particulière, parmi plusieurs possibles, de réaliser la technique présentée ci-dessus, en relation avec les figures 5 à 9. En effet, la technique de l'invention se réalise indifféremment :
- sur une machine de calcul reprogrammable (un processeur ou un microcontrôleur par exemple) exécutant un programme comprenant une séquence d'instructions, ou
- sur une machine de calcul dédiée (par exemple un ensemble de portes logiques comme un FPGA ou un ASIC, ou tout autre module matériel).

Dans le cas où l'invention est implantée sur une machine de calcul reprogrammable, le programme correspondant (c'est-à-dire la séquence d'instructions) peut être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé de gestion, par un dispositif (10), d'une matrice de touches comprenant au moins une ligne (LIG0 à LIG3) et au moins deux colonnes (COL0 à COL2), chaque touche permettant, quand elle est pressée, de court-circuiter une ligne et une colonne de ladite matrice, le procédé comprenant au moins deux itérations (Tₙ, Tₙ₊₁) d'une phase de balayage comprenant les étapes suivantes pour chacune des lignes traitées successivement :
• écriture d'une valeur logique prédéterminée sur la ligne ; et
• pour chaque colonne, lecture d'une valeur logique sur la colonne pour déterminer si la colonne est en court-circuit avec la ligne, par comparaison entre la valeur logique lue et la valeur logique prédéterminée,
**caractérisé en ce que**, pendant au moins une partie d'une plage temporelle (IT) comprise entre deux itérations successives (Tₙ, Tₙ₊₁) de la phase de balayage, le dispositif effectue :
• un premier mécanisme de protection (92), consistant à lire une valeur logique sur au moins une ligne ou colonne, et détecter une tentative de balayage illicite en fonction de la valeur logique lue ; et
• un deuxième mécanisme de protection (91, 93), consistant à écrire une valeur logique arbitraire, égale à ou différente de la valeur logique prédéterminée, sur au moins une ligne ou colonne, de manière à empêcher une tentative de balayage illicite ;
**en ce que** le dispositif effectue le deuxième mécanisme de protection (91, 93), sur au moins une ligne ou colonne donnée, pendant au moins une partie (P1, P3) de la plage temporelle (IT), sauf pendant au moins un intervalle de temps de détection (P2),
**en ce que** pendant chaque intervalle de temps de détection, le dispositif effectue le premier mécanisme de protection (92), consistant à lire une valeur logique sur ladite au moins une ligne ou colonne donnée, et détecter une tentative de balayage illicite si la valeur logique lue est différente de ladite valeur logique arbitraire écrite par le deuxième mécanisme avant ledit intervalle de temps de détection,
**en ce que** chaque ligne ou colonne sur laquelle le dispositif écrit, avant ledit intervalle de temps de détection, en effectuant le deuxième mécanisme de protection, est placée dans un état de basse impédance,
**en ce que** chaque ligne ou colonne sur laquelle le dispositif lit, pendant ledit intervalle de temps de détection, en effectuant le premier mécanisme de protection, est placée dans un état de haute impédance,
et **en ce que**, pour ladite au moins une ligne ou colonne donnée, le début de l'intervalle de temps de détection correspond à un passage dudit état de basse impédance audit état de haute impédance, entraînant une tension mesurable par le dispositif si un courant découplant d'une tentative de balayage illicite est présent sur ladite au moins une ligne ou colonne donnée.

2. Procédé selon la revendication 1, **caractérisé en ce que** le nombre et/ou la position et/ou la durée du ou des intervalle(s) de temps de détection varie(nt) aléatoirement d'une plage temporelle intermédiaire à l'autre.

3. Procédé selon l'une quelconque des revendications 1 et 2, **caractérisé en ce que** le deuxième mécanisme de protection consiste à écrire une valeur logique arbitraire qui change au sein de ladite plage temporelle et/ou d'une plage temporelle intermédiaire à l'autre.

4. Procédé selon la revendication 3, **caractérisé en ce que** le changement de valeur logique arbitraire, au sein de ladite plage temporelle et/ou d'une plage temporelle intermédiaire à l'autre, est aléatoire.

5. Procédé selon l'une quelconque des revendications 1 à 4, **caractérisé en ce que** le dispositif effectue le deuxième mécanisme de protection pendant toute ladite plage temporelle (IT), sauf pendant ledit au moins un intervalle de temps de détection (P2), le dispositif effectuant le premier mécanisme de protection pendant chaque intervalle de temps de détection.

6. Procédé selon l'une quelconque des revendications 1 à 5, **caractérisé en ce que** le dispositif effectue les premier et deuxième mécanismes de protection sur toutes les lignes et colonnes.

7. Produit programme d'ordinateur, comprenant des instructions de code de programme pour la mise en oeuvre du procédé selon au moins une des revendications 1 à 6, lorsque ledit programme est exécuté sur un ordinateur ou un processeur.

8. Médium de stockage lisible par ordinateur et non transitoire, stockant un programme d'ordinateur comprenant un jeu d'instructions exécutables par un ordinateur ou un processeur pour mettre en oeuvre le procédé selon au moins une des revendications 1 à 6.

## Patentansprüche

1. Verfahren zum Verwalten durch eine Vorrichtung (10) einer Tastenmatrix, umfassend mindestens eine Zeile (LIG0 bis LIG3) und mindestens zwei Spalten (COL0 bis COL2), wobei jede Taste ermöglicht, wenn sie gedrückt wird, eine Zeile und eine Spalte der Matrix kurzzuschließen, wobei das Verfahren mindestens zwei Iterationen (Tₙ, Tₙ₊₁) einer Abtastphase aufweist, umfassend die folgenden Schritte für jede der nacheinander bearbeiteten Zeilen:
• Schreiben eines vorgegebenen logischen Wertes auf der Zeile; und
• für jede Spalte, Auslesen eines logischen Wertes aus der Spalte, um durch einen Vergleich des ausgelesenen logischen Wertes mit dem vorbestimmten logischen Wert zu bestimmen, ob die Spalte mit der Zeile kurzgeschlossen ist,
**dadurch gekennzeichnet, dass** während mindestens eines Teils eines Zeitbereichs (IT) zwischen zwei aufeinanderfolgenden Iterationen (Tₙ, Tₙ₊₁) der Abtastphase die Vorrichtung Folgendes ausführt:
• einen ersten Schutzmechanismus (92), der darin besteht, einen logischen Wert aus mindestens einer Zeile oder Spalte auszulesen und einen unerlaubten Abtastversuch in Abhängigkeit von dem ausgelesenen logischen Wert zu erkennen; und
• einen zweiten Schutzmechanismus (91, 93), der darin besteht, einen willkürlichen logischen Wert, der gleich dem vorbestimmten logischen Wert ist oder davon verschieden ist, in mindestens eine Zeile oder Spalte zu schreiben, um einen unerlaubten Abtastversuch zu verhindern; und
dass die Vorrichtung einen zweiten Schutzmechanismus (91, 93) auf mindestens einer bestimmten Zeile oder Spalte während mindestens eines Teils (P1, P3) des Zeitbereichs (IT) außer während mindestens eines Zeitintervalls des Erkennens (P2) durchführt,
dass während des Zeitintervalls des Erkennens die Vorrichtung den ersten Schutzmechanismus (92) durchführt, der darin besteht, einen logischen Wert aus mindestens einer bestimmten Zeile oder Spalte auszulesen und einen unerlaubten Abtastversuch zu erkennen, wenn sich der ausgelesene logische Wert von dem willkürlichen logischen Wert unterscheidet, der von dem zweiten Mechanismus vor dem Zeitintervall des Erkennens geschrieben wird,
dass jede Zeile oder Spalte, in die die Vorrichtung vor dem Zeitintervall des Erkennens schreibt, indem sie den zweiten Schutzmechanismus durchführt, in einen Zustand niedriger Impedanz gesetzt wird,
dass jede Zeile oder Spalte, aus der die Vorrichtung während des Zeitintervalls des Erkennens ausliest, indem sie den ersten Schutzmechanismus durchführt, in einen Zustand hoher Impedanz gesetzt wird,
und dass für die mindestens eine bestimmte Zeile oder Spalte der Beginn des Zeitintervalls des Erkennens einem Übergang von dem Zustand niedriger Impedanz in den Zustand hoher Impedanz entspricht, der eine durch die Vorrichtung messbare Spannung mit sich bringt, wenn ein Strom, der sich aus einem unerlaubten Abtastversuch ergibt, auf der mindestens einen Zeile oder Spalte vorhanden ist.

2. Verfahren nach Anspruch 1, **dadurch gekennzeichnet, dass** die Anzahl und/oder die Position und/oder die Dauer des Zeitintervalls oder der Zeitintervalle des Erkennens zufällig von einem Zwischenzeitbereich zu dem anderen variiert (en).

3. Verfahren nach einem der Ansprüche 1 und 2, **dadurch gekennzeichnet, dass** der zweite Schutzmechanismus darin besteht, einen willkürlichen logischen Wert zu schreiben, der sich in dem Zeitbereich und/oder von einem Zwischenzeitbereich zu einem anderen ändert.

4. Verfahren nach Anspruch 3, **dadurch gekennzeichnet, dass** das Ändern des willkürlichen logischen Werts in dem Zeitbereich und/oder von einem Zwischenzeitbereich zu einem anderen zufällig ist.

5. Verfahren nach einem der Ansprüche 1 bis 4, **dadurch gekennzeichnet, dass** die Vorrichtung den zweiten Schutzmechanismus während des gesamten Zeitbereichs (IT) außer während des mindestens einen Zeitintervalls des Erkennens (P2) durchführt, wobei die Vorrichtung den ersten Schutzmechanismus während jedes Zeitintervalls des Erkennens durchführt.

6. Verfahren nach einem der Ansprüche 1 bis 5, **dadurch gekennzeichnet, dass** die Vorrichtung den ersten und zweiten Schutzmechanismus auf allen Zeilen und Spalten durchführt.

7. Computerprogrammprodukt, das Programmcodebefehle für die Ausführung des Verfahrens nach mindestens einem der Ansprüche 1 bis 6 aufweist, wenn das Programm auf einem Computer oder einem Prozessor ausgeführt wird.

8. Computer lesbares nicht transientes Speichermedium, das ein Computerprogramm speichert, das einen Satz an Befehlen umfasst, die durch einen Computer oder einen Prozessor ausgeführt werden können, um das Verfahren nach mindestens einem der Ansprüche 1 bis 6 durchzuführen.

## Claims

1. Method for the management, by a device (10), of a matrix of keys comprising at least one row (LIG0 to LIG3) and at least two columns (COL0 to COL2), each key, when pressed, enabling the short-circuiting of a row and a column of said matrix, the method comprising at least two iterations (Tₙ, Tₙ₊₁) of a scan phase comprising the following steps for each of the rows processed successively:
• writing a predetermined logic value to the row; and
• for each column, reading a logic value in the column to determine whether the column is short-circuited with the row, by comparison between the logic value read and the predetermined logic value,
**characterized in that**, during at least one part of a time slot (IT) included between two successive iterations (Tₙ, Tₙ₊₁) of the scan phase, the device carries out:
• a first mechanism of protection (92) consisting in reading a logic value on at least one row or column, and detecting an attempt at illicit scanning as a function of the logic value read; and
• a second mechanism of protection (91, 93) consisting in writing an arbitrary logic value, equal to or different from the predetermined logic value, to at least one row or column, so as to prevent an attempt at illicit scanning,
**in that** the device carries out the second mechanism of protection (91; 93) on at least one given row or column, during at least one part (P1, P3) of the time slot (IT) except during at least one detection time interval (P2),
**in that** during each detection time interval, the device carries out the first mechanism of protection (92), consisting in reading a logic value on said at least one given row or column, and detecting an attempt at illicit scanning if the logic value read is different from said arbitrary logic value written by the second mechanism before said detection time interval,
**in that** each row or column to which the device writes, before said detection time interval, in carrying out the second mechanism of protection, is placed in a state of low impedance,
**in that** each row or column on which the device reads, during said detection time interval, in carrying out the first mechanism of protection, is placed in a state of high impedance,
and **in that**, for said at least one given row or column, the start of the detection time interval corresponds to a passage from said state of low impedance to said state of high impedance, giving rise to a voltage measurable by the device if a current resulting from an attempt at illicit scanning is present on said at least one given row or column.

2. Method according to claim 1, **characterized in that** the number and/or position and/or duration of the detection time interval or intervals vary randomly from one intermediate time slot to another.

3. Method according to any one of the claims 1 and 2, **characterized in that** the second mechanism of protection consists in writing an arbitrary logic value which changes within said time slot and/or from one intermediate time slot to another.

4. Method according to claim 3, **characterized in that** the change in arbitrary logic value within said time slot and/or from one intermediate time slot to another is random.

5. Method according to any one of the claims 1 to 4, **characterized in that** the device carries out the second mechanism of protection throughout said time slot (IT), except during said at least one detection time interval (P2), the device carrying out the first mechanism of protection during each detection time interval.

6. Method according to any one of the claims 1 to 5, **characterized in that** the device carries out the first and second mechanisms of detection on all the rows and columns.

7. Computer program product comprising program code instructions for implementing the method according to any one of the claims 1 to 6, when said program is executed on a computer or a processor.

8. Computer-readable and non-transient storage medium storing a computer program comprising a set of instructions executable by a computer or a processor to implement the method according to any one of the claims 1 to 6.
